# FASCICULE DE BREVET EUROPEEN

(11) **EP 2 210 251 B1**
(45) Date de publication et mention de la délivrance du brevet: **30.04.2014**
(21) Numéro de dépôt: 08855265.8
(22) Date de dépôt: 10.11.2008
(51) Int. Cl.: G10K 11/168, B60R 13/08

(54) **ENSEMBLE D'INSONORISATION AYANT UNE FONCTION DE DECOR POREUX**
SICHERHEITSÜBERPRÜFUNGSANORDNUNG MIT PORÖSER DEKORATION
SOUND-PROOFING ASSEMBLY HAVING A POROUS DECORATION FUNCTION

(30) Priorité: 12.11.2007 FR 0707915
(43) Date de publication de la demande: 28.07.2010
(73) Titulaire: Faurecia Automotive Industrie, 92000 Nanterre (FR)
(72) Inventeur: BISCHOFF, Lars, 38114 Braunschweig (DE); DUVAL, Arnaud, 38518 Gifhorn (DE)
(74) Mandataire: Domenego, Bertrand
(86) Numéro de dépôt international: PCT/FR2008/052023
(87) Numéro de publication internationale: WO 2009/068804

(56) Documents cités:
- WO-A-03/069596
- FR-A- 2 888 386
- FR-A- 2 889 617
- US-A1- 2006 289 231
- US-B1- 6 296 075

## Description

La présente invention concerne un ensemble d'insonorisation ayant une fonction de décor poreux, selon la revendication 1.

Bien qu'elle ait des applications dans d'autres domaines techniques, l'invention est particulièrement avantageuse pour l'insonorisation d'espaces sensiblement clos tels que l'habitacle d'une automobile, qui est entouré de sources de bruit telles que le moteur, le contact des pneumatiques avec une route, etc.

Une telle insonorisation met en oeuvre plusieurs phénomènes tels que « l'amortissement », essentiellement aux basses fréquences, « l'isolation », essentiellement aux moyennes et hautes fréquences, et « l'absorption », essentiellement dans le domaine des moyennes et hautes fréquences. Ces deux derniers phénomènes sont parfois désignés ensemble par l'expression « réduction de bruit ».

L'invention concerne essentiellement cette « réduction de bruit », c'est-à-dire l'insonorisation dans la gamme des moyennes et hautes fréquences. Cette réduction de bruit est particulièrement importante aux moyennes fréquences, entre 400 et 1000 Hz car l'oreille humaine est très sensible aux sons compris dans cette gamme de fréquences.

On a déjà cherché à utiliser, pour cette insonorisation, des systèmes dits « à masse lourde ». Ainsi, le document GB-2 163 388 décrit un système masse-ressort ayant une couche ressort double. Malgré le poids important d'une telle insonorisation, l'effet de réduction de bruit aux moyennes fréquences est relativement réduit. L'inconvénient principal est le poids important de l'insonorisation.

On a donc cherché à réduire le poids de l'insonorisation, et le document WO 98/18657 décrit ainsi un dispositif ayant deux couches poreuses de perméabilités différentes, appelé dans le présent mémoire « système à bi-perméabilité ». Un tel système comprend deux couches de perméabilités ou résistances au passage de l'air qui sont différentes. Il a l'avantage d'être léger, mais il n'assure pratiquement pas d'isolation acoustique et ne convient donc pas à de nombreux ensembles d'insonorisation d'espace clos.

L'insonorisation des espaces clos tels que l'habitacle d'une automobile a été largement perfectionné par le système décrit dans le document WO 03/069596. Ce système élaboré d'insonorisation comprend deux groupes de couches. Un groupe de type masse-ressort comporte une couche de type masse lourde associée à une couche poreuse formant ressort. Ce groupe constitue donc un système masse-ressort classique, mais la masse de la couche de type masse lourde et l'épaisseur de la couche formant ressort sont réduites, du tiers à la moitié par rapport à un système classique. Un autre groupe de couches, comprenant deux couches poreuses de perméabilités différentes, est associé au groupe de type masse-ressort, et l'ensemble des deux groupes de couches donne alors une insonorisation efficace dans toute la gamme de fréquences intéressantes, avec une réduction de poids du quart à la moitié par rapport au système masse-ressort classique.

On utilise donc couramment ce système d'insonorisation du document WO 03/069596. Cependant, lorsque la surface d'un tel système doit être apparente, elle doit être revêtue d'une couche ayant une fonction de décor poreux, par exemple d'une moquette lorsque l'ensemble d'insonorisation est destiné à être utilisé comme plancher.

L'inconvénient d'un tel système, dans des applications dans lesquelles de l'eau ou de la neige peut être présente, est que l'eau peut imprégner les couches poreuses et modifier considérablement les propriétés d'insonorisation.

Il est donc souhaitable qu'un système d'insonorisation destiné à de telles applications empêche la pénétration d'eau dans les couches poreuses.

Le document WO 02/094616 décrit un système d'insonorisation dans lequel un élément de surface, pouvant comprendre une moquette, a des propriétés hydrophobes. Cependant, cet élément est poreux, et il ne comporte pas de film.

Le système du type masse-ressort décrit dans le document précité GB-2 163 388 possède une couche de masse lourde, qui est étanche et massive, tournée du côté auquel est placée une moquette ; cette couche assure donc l'étanchéité tout en participant à l'insonorisation avec les couches adjacentes.

Le document EP-1 710 126 décrit l'utilisation d'un film extérieur qui ne participe pas à l'insonorisation. Ce film est placé d'un côté d'un système d'insonorisation essentiellement du type décrit dans le document précité WO 98/18657, tout en étant indépendant de ce système. De préférence, une autre couche de film est placée de l'autre côté du système d'insonorisation, et les deux couches de film sont soudées à leurs bords afin qu'elles empêchent toute pénétration d'humidité.

L'invention a pour objet, dans le cas d'un système d'insonorisation associé à une couche ayant une fonction de décor poreux, telle qu'une moquette, un non-tissé décoratif ou fonctionnel, etc., l'obtention d'une fonction de protection contre l'humidité par intégration d'un film disposé entre la couche ayant une fonction de décor poreux et le reste du système d'insonorisation et participant à l'insonorisation.

Par exemple, dans le cas d'un système d'insonorisation décrit dans le document précité WO 03/069596, la protection contre l'humidité de l'élément constitué par le groupe de deux couches à effet de bi-perméabilité et la moquette est réalisée avec un film étanche qui constitue la couche la plus proche de la moquette, et qui a une résistance infinie au passage de l'air.

Cette réalisation repose sur la découverte du fait que deux systèmes d'insonorisation du type décrit dans le document WO 03/069596 identiques mis à part la couche adjacente à la moquette, donnaient des propriétés acoustiques pratiquement équivalentes d'une part lorsque cette couche adjacente à la moquette était constituée d'un non-tissé de résistance au passage de l'air de 400 N.s/m³, formé soit d'un non-tissé textile recyclé comprimé (fibres de polyester, de polypropylène et de coton) de 3 mm d'épaisseur, soit d'un non-tissé technique résistif de polyester et de cellulose (ou de fibres filées sous pression « spin-bonded » et de fibres étirées par soufflage « melt-blown »), et d'autre part lorsque cette couche adjacente à la moquette est un film ayant une masse surfacique de 47 g/m², ce film étant placé entre la moquette et les autres couches de système d'insonorisation.

Ainsi, invention permet l'obtention d'ensembles d'insonorisation à propriétés acoustiques pratiquement identiques à celles du système du document WO 03/069596, avec en plus la propriété d'étanchéité à l'humidité, avec un coût analogue ou même éventuellement réduit.

Plus précisément, l'invention concerne un ensemble d'insonorisation selon la revendication 1.

Avantageusement, l'élément d'ensemble d'insonorisation donne un effet d'insonorisation pratiquement équivalent à celui que donne un élément connu d'insonorisation à effet d'insonorisation par bi-perméabilité qui ne diffère de l'élément d'ensemble d'insonorisation à film étanche que parce qu'il comprend, à la place du film étanche, un non-tissé ayant une résistance au passage de l'air d'environ 400 N.s/m³, cette résistance au passage de l'air étant différente de celle de la première couche poreuse.

De préférence, le film étanche a une masse surfacique comprise entre 30 et 80 g/m².

De préférence, la couche poreuse acoustiquement absorbante est une couche de mousse à cellules ouvertes de porosité élevée, de tortuosité élevée et de bonne résistance au passage de l'air, ayant, grâce à sa tortuosité élevée, d'excellentes propriétés d'absorption acoustique aux fréquences moyennes et hautes. Il est ainsi avantageux que la tortuosité de la couche de mousse soit d'au moins 1,4, que la couche de mousse de tortuosité élevée soit élastique, qu'elle ait une porosité supérieure à 0,9, et/ou qu'elle ait une résistivité à l'écoulement de l'air comprise entre 10 000 et 90 000 N.s/m⁴.

De préférence, la couche de mousse de tortuosité élevée est formée d'une matière plastique choisie parmi les polyuréthannes et les résines mélamines.

De préférence, la couche poreuse acoustiquement absorbante est une couche de feutre. De préférence, le feutre contient au moins 50% de microfibres.

De préférence, la couche extérieure ayant une fonction de décor poreux est choisie parmi une moquette, un non-tissé, un non-tissé aiguilleté, un non-tissé à deux épaisseurs, et une couche poreuse de décoration.

L'invention concerne aussi un ensemble d'insonorisation selon la revendication 7.

Avantageusement, l'organe acoustiquement isolant comprend deux couches formées l'une d'air et l'autre d'une couche poreuse.

Dans un mode de réalisation, la couche poreuse de l'organe acoustiquement isolant est adjacente à l'organe structurel.

Dans un exemple de ce mode de réalisation, la couche extérieure ayant une fonction de décor poreux est un non-tissé, et l'ensemble d'insonorisation ayant une fonction de décor poreux est destiné à un passage de roue de véhicule automobile.

Dans un autre mode de réalisation, la couche d'air de l'organe acoustiquement isolant est adjacente à l'organe structurel.

De préférence, la couche poreuse de l'organe acoustiquement isolant est choisie parmi une mousse à cellules ouvertes et un feutre.

Dans un autre exemple de réalisation, l'organe structurel est un organe rigide obtenu par formage d'au moins une couche de feutre contenant des fibres thermofusibles, et l'ensemble d'insonorisation ayant une fonction de décor poreux est destiné à un plancher structurel d'automobile.

Le principal avantage de l'invention est de permettre l'utilisation des systèmes d'insonorisation élaborés du type décrit dans le document précité WO 03/069596 dans les applications qui nécessitent la résistance à l'humidité. On peut citer à cet effet les planchers d'habitacle qui portent une moquette, les planchers de coffre qui portent une moquette, les planchers structurels, ayant éventuellement une couche d'air supplémentaire, les planchers de chargement de coffre, les revêtements intérieurs et extérieurs de passage de roue, les organes d'insonorisation placés sous le moteur dans le compartiment moteur, les régions de l'habitacle dans lesquelles une moquette et un isolant de tableau de bord se recouvrent, etc.

Un autre avantage de l'invention est que ce système perfectionné résistant à l'eau ne nécessite aucune étape supplémentaire par rapport à la fabrication du système déjà connu. En conséquence, son coût peut être du même ordre de grandeur.

Un autre avantage est que les propriétés d'absorption sur de larges bandes sont pratiquement les mêmes que celles du système connu, les réductions de bruit des deux systèmes étant tout à fait comparables. Ainsi, l'invention qui intègre un film permet de conserver l'avantage de réduction de poids de l'ordre de 25% et plus par rapport aux systèmes antérieurs à ceux qui sont décrits dans le document précité WO 03/069596.

Un autre avantage de l'invention est qu'elle permet l'utilisation d'un procédé de fabrication simplifié, lorsque la couche poreuse de l'élément est formée de mousse absorbante obtenue par injection directe de la mousse sur le film placé derrière la moquette.

D'autres caractéristiques et avantages de l'invention seront mieux compris à la lecture de la description qui va suivre d'exemples de réalisation, faite en référence aux dessins annexés sur lesquels :
- la figure 1 représente la structure d'un système d'insonorisation du type décrit dans le document précité WO 03/069596, muni d'une moquette ;
- la figure 2 est analogue à la figure 1 mais correspond à un ensemble d'insonorisation selon l'invention ; et
- la figure 3 est un graphique qui permet la comparaison des courbes d'absorption acoustique obtenues avec les deux systèmes des figures 1 et 2 ;
- la figure 4 est une coupe analogue aux figures 1 et 2, représentant un ensemble d'insonorisation de plancher structurant selon l'invention ; et
- la figure 5 représente un autre exemple d'ensemble d'insonorisation selon l'invention appliqué à un passage de roue.

La description qui suit concerne essentiellement l'utilisation d'un film étanche, et on ne décrit donc que les propriétés qui sont affectées par l'invention, les caractéristiques des autres éléments constituants non décrits en détails étant telles que l'indique le document précité WO 03/069596.

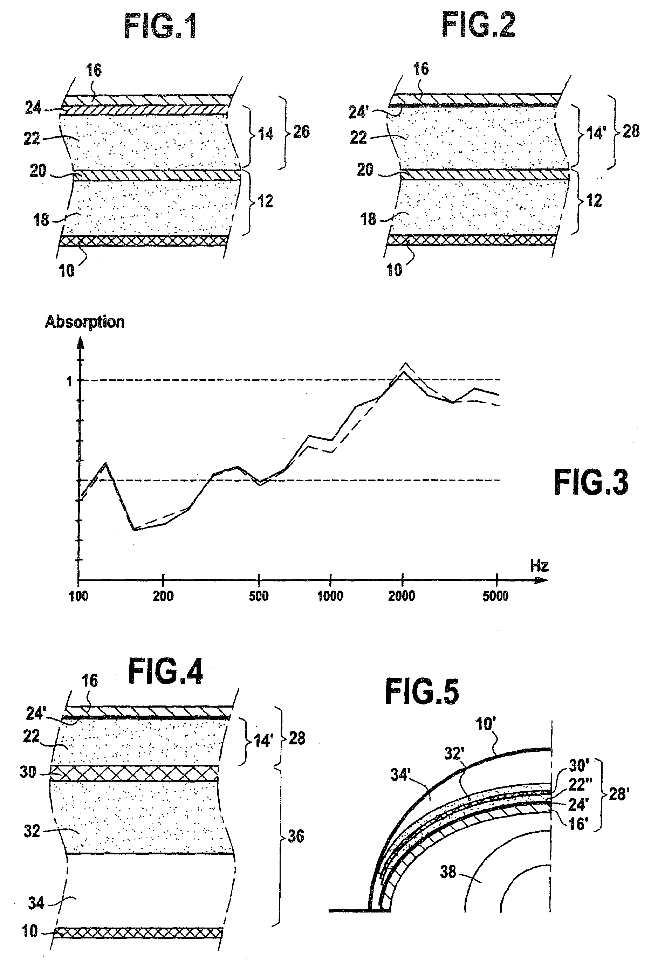

La figure 1 est une coupe d'un ensemble d'insonorisation selon le document précité WO 03/069596, associé à une moquette.

Plus précisément, sur une tôle 10, par exemple de 0,8 mm d'épaisseur, sont disposés un groupe de couches 12 formant un système masse-ressort et un groupe de couches 14 formant un système à bi-perméabilité. Une moquette 16 est placée sur le groupe 14.

Le groupe 12 de type masse-ressort comprend une couche 18 qui est poreuse et forme ressort (couche poro-élastique), constituée d'une mousse ou d'un non-tissé ou feutre par exemple. La couche 20 est une couche de type masse lourde avantageusement constituée d'un matériau viscoélastique chargé.

Le groupe de couches 14 comprend une première couche poreuse 22 et une seconde couche poreuse 24 ayant des résistances au passage de l'air différentes.

La figure 2 est analogue à la figure 1 et représente simplement la modification réalisée selon l'invention. Plus précisément, la couche poreuse 24 du groupe 14, représentée sur la figure 1, est remplacée par un film 24', ayant une masse surfacique au plus égale à 150 g/m², et de préférence comprise entre 30 et 80 g/m². Le groupe de couches 14 représenté sur la figure 1 est donc remplacé par un groupe de couches 14' comprenant la couche poreuse 22 et le film 24'.

L'invention concerne essentiellement le remplacement de l'élément désigné par la référence 26 sur la figure 1, constitué par le groupe de couches à effet de bi-perméabilité 14 et la moquette 16, faisant partie d'un élément d'ensemble d'insonorisation, par l'élément désigné par la référence 28 sur la figure 2, constitué par le groupe 14' et la moquette 16. Dans cet élément 28, la résistance au passage de l'air du film 24' est infinie.

La figure 3 représente les courbes d'absorption acoustique obtenues avec d'une part l'ensemble de la figure 1 (ayant une couche 24 de non-tissé technique de 0,5 mm d'épaisseur et de 430 N.s/m³ de résistance au passage de l'air) (courbe en trait plein), et d'autre part l'ensemble de la figure 2 (ayant un film 24' de polypropylène de 47 g/m², ayant une épaisseur d'environ 0,05 mm) (courbe en trait interrompu).

Comme l'indique la figure 3, par rapport au système de la figure 1, le système de la figure 2 est légèrement moins efficace aux fréquences moyennes et légèrement plus efficace aux fréquences basses et hautes. Globalement, les résultats obtenus peuvent être considérés comme pratiquement équivalents, car les deux systèmes donnent des propriétés d'insonorisation essentiellement identiques (les courbes correspondantes sont presque superposées dans toute la plage de fréquences). Ainsi, la moyenne de la valeur absolue de la différence entre l'absorption acoustique de l'élément connu et l'absorption acoustique de l'élément selon l'invention à chaque fréquence est inférieure à 5% sur la plage de fréquences entre 100 Hz et 5 000 Hz.

On décrit maintenant deux exemples d'application d'un tel ensemble d'insonorisation.

Le premier exemple concerne un plancher structurant. La partie supérieure 28 de l'ensemble d'insonorisation de la figure 4 comprend l'élément d'ensemble d'insonorisation déjà décrit en référence à la figure 2. Cet élément rigide est placé sur un organe structurel 30 de plancher isolant, par exemple formé par thermoformage d'une ou deux couches de feutre, comprenant par exemple des quantités égales de fibres de verre et de fibres thermofusibles.

Sous l'organe structurel 30 sont disposées une couche poreuse 32 et un espace d'air 34, l'ensemble d'insonorisation étant placé sur une tôle 10. Les positions de la couche poreuse 32 et de l'espace d'air 34 peuvent être inversées. L'organe structurel de plancher 30, la couche 32 et l'espace d'air 34 forment un élément différent d'ensemble d'insonorisation 36 qui coopère avec l'élément 28 selon l'invention.

Un autre exemple d'application de l'invention est représenté sur la figure 5 qui indique schématiquement la disposition d'un ensemble d'insonorisation de passage de roue.

La référence 10' désigne une tôle formant le passage de roue. Du côté de la roue 38, l'ensemble d'insonorisation comprend d'abord un élément 28' d'ensemble d'insonorisation qui comprend successivement un non-tissé aiguilleté 16', formé d'une ou deux couches de non-tissé, puis le film 24' et une couche poreuse 22', ces trois couches formant un élément d'ensemble d'insonorisation 28' analogue à l'élément 28 décrit en référence à la figure 2, la moquette 16 de la figure 2 étant remplacée par un non-tissé 16' destiné à résister aux chocs des cailloux lancés par la roue 38 lors du déplacement du véhicule.

Cet élément 28' d'ensemble d'insonorisation est associé à un ensemble structurel rigide 30', portant une couche poreuse 32' elle-même séparée de la tôle 10' par un espace d'air 34'. Cet espace d'air est purement éventuel, la couche 32' pouvant être directement au contact de la tôle 10'.

Bien qu'on ait décrit les divers modes de réalisation de l'invention en référence à des couches poreuses qui peuvent être des couches de mousse de matière plastique ou des couches de feutre, il est souhaitable de tirer avantage des couches de mousse à cellules ouvertes de porosité élevée et de tortuosité élevée qui ont d'excellentes propriétés d'absorption acoustique aux fréquences moyennes et hautes. De telles couches de mousse ont une tortuosité avantageusement supérieure à 1,4, elles sont élastiques, leur porosité est de préférence supérieure à 0,9, et leur résistivité à l'écoulement de l'air est avantageusement comprise entre 10 000 et 90 000 N.s/m⁴.

De telles couches de mousse peuvent être formées de polyuréthanne ou de résine mélamine par exemple.

Les éléments d'ensemble d'insonorisation selon l'invention comprennent donc des couches mettant en oeuvre un effet de bi-perméabilité équivalent avec une couche extérieure ayant une fonction de décor poreux. Bien qu'on ait indiqué que cette couche extérieure était une moquette ou un non-tissé protecteur, il peut aussi s'agir d'un non-tissé ayant simplement une fonction décorative, en plus de sa porosité.

Le procédé de fabrication d'un tel ensemble d'insonorisation correspond à celui de l'ensemble décrit dans le document précité WO 03/069596. Cependant, le fait que le film étanche est adjacent à une couche de mousse permet la réalisation de cette couche de mousse par injection directe sur ce film : il ne risque pas de se former une couche intermédiaire par imprégnation d'une couche poreuse par une composition de mousse injectée qui pourrait perturber les propriétés acoustiques du système obtenu. Ceci évite aussi la pénétration de mousse à travers la moquette.

On sait par ailleurs que, lorsqu'une couche poreuse est formée d'un non-tissé ou feutre, il est avantageux pour l'insonorisation que les fibres soient des microfibres.

On a indiqué qu'il existait un organe structurel en référence au mode de réalisation des figures 4 et 5. Cet organe structurel est de préférence léger, par exemple sous forme d'un simple organe structurel dont la rigidité est obtenue par exemple par compression d'un ensemble formé de fibres dont certaines au moins sont thermofusibles, afin que l'organe structurel puisse être mis à la forme voulue tout en possédant les propriétés mécaniques voulues.

Sans être liés par une théorie spécifique, on considère que le bon comportement d'absorption aux moyennes fréquences est lié à une sorte de résonance d'un système de type « masse-ressort » obtenu avec le film (masse) et la couche poreuse (ressort), alors que le comportement à hautes fréquences est lié aux propriétés d'absorption de la couche extérieure à effet de surface elle-même.

Bien qu'elle ait décrit l'invention en référence à un système d'insonorisation du type décrit dans le document WO 03/069596, elle s'applique aussi au cas dans lequel la tôle 10 n'est pas à une extrémité de l'empilement de couches, mais se trouve en position intermédiaire. Par exemple, la tôle 10 pourrait se trouver entre un premier groupe de couches et un second groupe de couches comprenant un élément d'insonorisation tel que l'élément 28.

Comme décrit.dans WO 03/069596, la première couche poreuse 22 est avantageusement une couche de mousse thermoplastique ou de feutre. Dans l'exemple représenté sur les Figures 2 et 4, cette couche est formée d'un seul tenant sur toute son épaisseur. Elle présente une densité homogène sur toute son épaisseur avantageusement supérieure à 10 kg/m³, et comprise entre 15 kg/m³ et 100 kg/m³. Sa porosité (proportion d'air emprisonné pour un volume donné) est avantageusement supérieure à 0,9 et de préférence supérieure à 0,95. Cette couche présente avantageusement une épaisseur comprise entre 5 mm et 20 mm.

La résistivité acoustique de la première couche poreuse est homogène sur son épaisseur et est comprise entre 10 000 N.m⁻⁴.s et 50 000 N.m⁻⁴.s. Une méthode de mesure de cette résistivité est donnée dans la thèse « Mesure des paramètres caractérisant un milieu poreux. Etude expérimentale du comportement des mousses aux basses fréquences », Michel HENRY, soutenue le 3 octobre 1997 à l'Université du Mans.

Dans l'exemple représenté sur la Figure 2, la première couche poreuse 22 est appliquée sur la couche de masse lourde 20. Dans l'exemple de la Figure 4, la première couche poreuse 22 est appliquée sur l'organe structurel 30.

De même, la couche 20 de type masse lourde comprend avantageusement un matériau thermoplastique de type polyoléfine (Ethylène Vinyle Acétate Polyéthylène, Ethylène Propylène Diène Monomère) et incorpore des déchets du type bitume, craie et sulfate de baryum permettant d'obtenir une densité élevée pour peu cher. Son module d'Young est inférieur à 1 000 MPa, elle présente une densité supérieure ou égale à 1 500 kg/m³, de préférence supérieure ou égale à 2 000 kg/m³, une masse surfacique comprise entre 0,2 kg/m² et 9 kg/m² et avantageusement une épaisseur comprise entre 0,1 mm et 5 mm.

La couche poro-élastique 18 est avantageusement constituée de mousse thermoplastique ou de feutre. Elle peut être réalisée dans la même matière que la couche 22 ou dans une autre matière.

Sa densité est avantageusement comprise entre 15 kg/m³ et 100 kg/m³. Sa porosité est avantageusement supérieure à 0,95. Elle présente une épaisseur comprise entre 5 mm et 20 mm ou éventuellement 30 mm. La résistivité au passage de l'air de cette couche 18 est comprise entre 10 000 N.m⁻⁴.s et 50 000 N.m⁻⁴.s, ou plus généralement entre 10 000 N.m⁻⁴.s et 90 000 N.m⁻⁴.s.

Elle présente un module élastique compris entre 100 Pa et 100 000 Pa.

En outre, par « microfibres », on entend au sens de la présente demande des fibres de taille inférieure à 0,9 dtex avantageusement inférieure à 0,7 dtex.

En outre, lorsqu'une couche poreuse de tortuosité élevée est utilisée, cette couche poreuse est conforme à celle décrite dans la demande WO 2007/006950 de la Demanderesse. La tortuosité est alors mesurée par la détermination de la pente de la courbe représentant la variation du carré de l'indice de réfraction pour la longueur d'onde acoustique utilisée, en fonction de l'inverse de la racine carrée de la fréquence.

Dans l'exemple de la Figure 4, l'organe rigide 30 présente une rigidité caractérisée par un module d'Young supérieur à 1 000 MPa ou avantageusement supérieur à 1 500 MPa. L'organe 30 est léger, de sorte qu'il présente une masse surfacique inférieure à 3 500 g/m², avantageusement 3 000 g/m² et une épaisseur inférieure à 10 mm, avantageusement 6 mm. Ainsi, dans le cas d'un organe structurel 30 formé par thermoformage de deux couches de feutres comprenant des fibres de verre et des fibres thermofusibles, l'épaisseur de chaque couche est d'environ 3 mm et la masse surfacique de chaque couche est d'environ 1 500 g/m².

## Revendications

1. Ensemble d'insonorisation ayant une fonction de décor poreux, du type comprenant :
- un élément d'ensemble d'insonorisation ayant une fonction de décor poreux, l'élément comprenant trois couches dont une première (22, 22') est une couche poreuse acoustiquement absorbante, une seconde (24') est un film étanche ayant une masse surfacique de 150 g/m² au maximum, et une troisième est une couche extérieure (16, 16') ayant une fonction de décor poreux, le film étanche étant disposé entre la couche poreuse acoustiquement absorbante (22 ; 22') et la couche extérieure (16, 16') ayant une fonction de décor poreux,
l'ensemble comprenant de plus un groupe (12) de couches à fonction masse-ressort comprenant une couche (20) ayant une fonction de masse lourde et une couche poreuse (18) de type ressort poreux, le groupe (12) de couches à fonction masse-ressort étant disposé du côté de l'élément opposé à la couche extérieure ayant une fonction de décor poreux.

2. Ensemble selon la revendication 1, dans lequel le film étanche (16, 16') a une masse surfacique comprise entre 30 g/m² et 80 g/m².

3. Ensemble selon l'une des revendications 1 ou 2, dans lequel la couche poreuse acoustiquement absorbante (22 ; 22') est une couche de mousse à cellules ouvertes de tortuosité élevée.

4. Ensemble selon la revendication 3, dans lequel que la mousse de la couche de tortuosité élevée est formée d'une matière plastique choisie parmi les polyuréthannes et les résines mélamines.

5. Ensemble selon l'une quelconque des revendications précédentes, dans lequel la couche poreuse acoustiquement absorbante (22 ; 22') est une couche de feutre ou de non-tissé.

6. Ensemble selon l'une quelconque des revendications précédentes, dans lequel la couche extérieure (16, 16') ayant une fonction de décor poreux est choisie parmi une moquette, un non-tissé, un non-tissé aiguilleté, un non-tissé à deux épaisseurs, et une couche de décoration.

7. Ensemble d'insonorisation ayant une fonction de décor poreux, du type comprenant :
- un élément d'ensemble d'insonorisation ayant une fonction de décor poreux, l'élément comprenant trois couches dont une première (22, 22') est une couche poreuse acoustiquement absorbante, une seconde (24') est un film étanche ayant une masse surfacique de 150 g/m² au maximum, et une troisième est une couche extérieure (16, 16') ayant une fonction de décor poreux, le film étanche étant disposé entre la couche poreuse acoustiquement absorbante (22 ; 22') et la couche extérieure (16, 16') ayant une fonction de décor poreux ,
l'ensemble comprenant de plus un groupe (36) de couches comprenant un organe structurel (30, 30') et un organe acoustiquement isolant comprenant au moins une couche poreuse (32, 32'), l'organe acoustiquement isolant étant adjacent, du côté opposé à l'organe structurel, à une tôle (10, 10') de la carrosserie d'un véhicule automobile.

8. Ensemble d'insonorisation selon la revendication 7, dans lequel l'organe acoustiquement isolant comprend deux couches formées l'une (34, 34') d'air et l'autre (32, 32') d'une couche poreuse,

9. Ensemble d'insonorisation selon l'une des revendications 7 ou 8, dans lequel la couche poreuse (32') de l'organe acoustiquement isolant est adjacente à l'organe structurel (30'), la couche extérieure (16') ayant une fonction de décor poreux est un non-tissé, et l'ensemble d'insonorisation ayant une fonction de décor poreux est destiné à un passage de roue de véhicule automobile.

10. Ensemble d'insonorisation selon l'une des revendications 7 ou 8, dans lequel l'organe structurel (30) est un organe rigide obtenu par formage d'au moins une couche de feutre contenant des fibres thermofusibles, et l'ensemble d'insonorisation ayant une fonction de décor poreux est destiné à un plancher structurel d'automobile.

## Patentansprüche

1. Schalldämmende Anordung mit einer porösen Dekorfunktion von dem Typ, der folgendes aufweist:
- ein Element einer schalldämmenden Anordnung mit einer porösen Dekorfunktion, wobei das Element drei Schichten aufweist, von denen eine erste Schicht (22, 22') eine poröse, schallabsorbierende Schicht ist, eine zweite Schicht (24') eine undurchlässige Schicht mit einer flächenbezogenen Masse von maximal 150 g/m² ist, und eine dritte Schicht eine Außenschicht (16, 16') mit einer porösen Dekorfunktion ist, wobei die undurchlässige Schicht zwischen der porösen, schallabsorbierenden Schicht (22; 22') und der Außenschicht (16, 16') mit einer porösen Dekorfunktion angeordnet ist,
wobei die Anordnung weiterhin eine Gruppe (12) von Schichten mit Masse-Feder-Funktion aufweist, die eine Schicht (20) mit einer Funktion einer schweren Masse und eine poröse Schicht (18) vom Typ einer porösen Feder aufweist, wobei die Gruppe (12) von Schichten mit Masse-Feder-Funktion auf der Seite des Elementes angeordnet ist, die der Außenschicht mit einer porösen Dekorfunktion gegenüberliegt.

2. Anordnung nach Anspruch 1,
wobei die undurchlässige Schicht (16, 16') eine flächenbezogene Masse zwischen 30 g/m² und 80 g/m² aufweist.

3. Anordnung nach einem der Ansprüche 1 oder 2,
wobei die poröse, schallabsorbierende Schicht (22; 22') eine Schicht aus offenzelligem Schaumstoff mit erhöhter Tortuosität ist.

4. Anordnung nach Anspruch 3,
wobei der Schaumstoff der Schicht mit erhöhter Tortuosität aus einem Kunststoff hergestellt ist, der aus Polyurethanen und Melaminharzen ausgewählt ist.

5. Anordnung nach einem der vorhergehenden Ansprüche,
wobei die poröse, schallabsorbierende Schicht (22; 22') eine Schicht aus Filz oder Vlies ist.

6. Anordnung nach einem der vorhergehenden Ansprüche,
wobei die Außenschicht (16, 16') mit einer porösen Dekorfunktion aus Textilmaterial, Vlies, Nadelvlies, Vlies mit zwei Schichten, und einer Dekorationsschicht ausgewählt ist.

7. Schalldämmende Anordnung mit einer porösen Dekorfunktion von dem Typ, der folgendes aufweist:
- ein Element einer schalldämmenden Anordnung mit einer porösen Dekorfunktion, wobei das Element drei Schichten aufweist, von denen eine erste Schicht (22, 22') eine poröse, schallabsorbierende Schicht ist, eine zweite Schicht (24') eine undurchlässige Schicht mit einer flächenbezogenen Masse von maximal 150 g/m² ist, und eine dritte Schicht eine Außenschicht (16, 16') mit einer porösen Dekorfunktion ist, wobei die undurchlässige Schicht zwischen der porösen, schallabsorbierenden Schicht (22; 22') und der Außenschicht (16, 16') mit einer porösen Dekorfunktion angeordnet ist,
wobei die Anordnung außerdem eine Gruppe (36) von Schichten aufweist, die ein strukturelles Organ (30, 30') und ein akustisch isolierendes Organ aufweist, das mindestens eine poröse Schicht (32, 32') besitzt, wobei das akustisch isolierende Element auf der dem strukturellen Organ gegenüberliegenden Seite an ein Blech (10, 10') der Karosserie eines Kraftfahrzeuges angrenzt.

8. Schalldämmende Anordnung nach Anspruch 7,
wobei das akustisch isolierende Organ zwei Schichten aufweist, wobei die eine Schicht (34, 34') aus Luft und die andere Schicht (32, 32') aus einer porösen Schicht besteht.

9. Schalldämmende Anordnung nach einem der Ansprüche 7 oder 8,
wobei die poröse Schicht (32') des akustisch isolierenden Organs an ein strukturelles Organ (30') angrenzt, wobei die Außenschicht (16') mit einer porösen Dekorfunktion ein Vlies ist, und wobei die schalldämmende Anordnung mit einer porösen Dekorfunktion für einen Radkasten eines Kraftfahrzeugs bestimmt ist.

10. Schalldämmende Anordnung nach einem der Ansprüche 7 oder 8,
wobei das strukturelle Organ (30) ein starres Organ ist, das man durch Herstellen von mindestens einer Schicht aus Filz erhält, die thermisch schmelzbare Fasern aufweist, und wobei die schalldämmende Anordnung mit einer porösen Dekorfunktion für eine strukturelle Wand eines Kraftfahrzeugs bestimmt ist.

## Claims

1. Soundproofing assembly having a porous decoration function of the type comprising:
● an element of a soundproofing assembly having a porous decoration function, wherein the element comprises three layers, of which a first (22, 22') is a sound-absorbing porous layer, a second (24') is an impermeable film having a mass per unit area of 150 g/m² at maximum, and a third is an outer layer (16, 16') having a porous decoration function, wherein the impermeable film is arranged between the sound-absorbing porous layer (22; 22') and the outer layer (16, 16') having a porous decoration function;
the assembly additionally comprising a group (12) of layers with a spring-mass function comprising a layer (20) having a heavy mass function and a porous ring-type porous layer (18), wherein the group (12) of layers with a spring-mass function are arranged on the opposite side of the element to the outer layer having a porous decoration function.

2. Assembly according to claim 1, in which the impermeable film (16, 16') has a mass per unit area in the range of between 30 g/m² and 80 g/m².

3. Assembly according to one of claims 1 or 2, in which the sound-absorbing porous layer (22; 22') is a high-tortuosity open-cell foam layer.

4. Assembly according to claim 3, in which the foam of the high-tortuosity layer is formed from a plastic material selected from polyurethanes and melamine resins.

5. Assembly according to any one of the preceding claims, in which the sound-absorbing porous layer (22; 22') is a felt or nonwoven layer.

6. Assembly according to any one of the preceding claims, in which the outer layer (16, 16') having a porous decoration function is selected from a moquette, a nonwoven, a needle-punched nonwoven, a double-thickness nonwoven and a decorative layer.

7. Soundproofing assembly having a porous decoration function of the type comprising:
● an element of a soundproofing assembly having a porous decoration function, wherein the element comprises three layers, of which a first (22, 22') is a sound-absorbing porous layer, a second (24') is an impermeable film having a mass per unit area of 150 g/m² at maximum, and a third is an outer layer (16, 16') having a porous decoration function, wherein the impermeable film is arranged between the sound-absorbing porous layer (22; 22') and the outer layer (16, 16') having a porous decoration function;
the assembly additionally comprising a group (36) of layers comprising a structural member (30, 30') and a sound insulation member comprising at least one porous layer (32, 32'), wherein the sound insulation member is on the opposite side to the structural member and adjacent to a panel (10, 10') of the body of a motor vehicle.

8. Soundproofing assembly according to claim 7, in which the sound insulation member comprises two layers, one (34, 34') formed from air and the other (32, 32') formed from a porous layer.

9. Soundproofing assembly according to one of claims 7 of 8, in which the porous layer (32') of the sound insulating member is adjacent to the structural member (30'), wherein the outer layer (16') having a porous decoration function is a nonwoven, and the soundproofing assembly having a porous decoration function is intended for a wheel housing in a motor vehicle.

10. Soundproofing assembly according to one of claims 7 or 8, in which the structural member (30) is a rigid member obtained by forming at least one layer of felt containing low-melt fibres, and the soundproofing assembly having a porous decoration function is intended for a structural floor of a motor vehicle.
